# EUROPEAN PATENT SPECIFICATION

(11) **EP 1 947 779 B1**
(45) Date of publication and mention of the grant of the patent: **12.12.2012**
(21) Application number: 06805042.6
(22) Date of filing: 24.10.2006
(51) Int. Cl.: H04B 17/00, H04W 4/06, H04W 24/00, H04W 92/00

(54) **METHOD FOR PERFORMING INTER-FREQUENCY OR INTER-SYSTEM MEASUREMENTS AND USER EQUIPMENT**
VERFAHREN ZUR DURCHFÜHRUNG VON ZWISCHENFREQUENZ- ODER ZWISCHENSYSTEM- MESSUNGEN UND BENUTZER ENDGERÄT
PROCÉDÉ DE MÉSURE INTERFREQUENCE OU INTERSYSTÈME ET TERMINAL UTILISATEUR

(30) Priority: 24.10.2005 CN 200510114376
(43) Date of publication of application: 23.07.2008
(73) Proprietor: Huawei Technologies Co., Ltd., Longgang District, Shenzhen Guangdong 518129 (CN)
(72) Inventor: YIN, Liyan, Guangdong 518129 (CN)
(74) Representative: Körber, Martin Hans
(86) International application number: PCT/CN2006/002835
(87) International publication number: WO 2007/048334

(56) References cited:
- EP-A- 1 292 039
- CN-A- 1 394 018
- CN-A- 1 404 321
- CN-A- 1 469 575
- SIEMENS: "Measurement requirements in conjunction with MBMS reception in different RRC states" 3GPP DRAFT; R4-040635, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. tsg_ran\WG4_Radio\TSGR4_33\Docs, no. Yokohama, Japan; 20041115, 11 November 2004 (2004-11-11), XP050173401
- "Universal Mobile Telecommunications System (UMTS); User Equipment (UE) procedures in idle mode and procedures for cell reselection in connected mode (3GPP TS 25.304 version 6.7.0 Release 6); ETSI TS 125 304" ETSI STANDARDS, LIS, SOPHIA ANTIPOLIS CEDEX, FRANCE, vol. 3-R2, no. V6.7.0, 1 September 2005 (2005-09-01), XP014031922 ISSN: 0000-0001

## Description

### Field of the Invention

The present invention relates to inter-frequency measurement or Inter-System technologies and broadcast and multicast technologies in the 3rd generation (3G) mobile communication system, and particularly to a method and user equipment (UE) for performing inter-frequency or inter-system measurements based on reception of broadcast/multicast services.

### Background of the Invention

The Universal Mobile Telecommunications System (UMTS) is a 3G mobile communication system that adopts the Wideband Code Division Multiple Access (WCDMA) air interface technology. The UMTS mainly develops in the 3rd Generation Partnership Project (3GPP), the global standardization organization for WCDMA and Global System for Mobile communications (GSM).

According to 3GPP UMTS standards, a UE may be in either of the two modes, idle and RRC connected, depending on whether the UE has established a radio resource control (RRC) connection. An RRC connected UE may have different states, depending on the stratum of the RRC connection and the transport channel type allowed to the UE. UEs in the CELL_PCH, CELL_FACH and CELL_DCH states may be differentiated at the cell stratum. UEs in the URA_PCH state may be differentiated at the UTRAN register area (URA) stratum.

To fully utilize mobile communication network resources, the 3G mobile communication system incorporates the concepts of multicast and broadcast, which is a technology that transmits the same data from one data source to multiple destinations. Hence, the 3GPP proposes the multimedia broadcast/multicast service (MBMS). MBMS is a point-to-multipoint service for transmitting the same data from one data source to multiple UEs in a mobile communication network, thus achieving sharing of network resources and increasing the utilization of network resources, especially air interface resources.

MBMS service data received by a UE includes MBMS point-to-multipoint traffic channel (MTCH) information, and MBMS point-to-multipoint control channel (MCCH) information. To ensure efficient utilization of MBMS resources, an MBMS preferred frequency layer is included in 3GPP specifications. The UTRAN requires that a UE receiving a specific type of MBMS service should select a preferred frequency layer, on which the UTRAN will transmit the MBMS service. The preferred frequency layer for each MBMS service is indicated by the UTRAN to UEs, and UEs receiving MBMS services should reside in the cell of the preferred frequency layer indicated by the UTRAN as much as possible.

In 3GPP specifications, UEs need to perform inter-frequency or inter-system measurements in inter-frequency and inter-system cells. When the hierarchical cell structure (HCS) is not in use, a UE performs inter-frequency or inter-system measurements in the following rules:
1.
   (1) If Sx > Sintersearch in the current serving cell of the UE, and the UTRAN has indicated the MBMS preferred frequency layer, and the current serving cell of the UE is not included in the MBMS preferred frequency layer, and the UTRAN has sent a Search HCS message to the current serving cell of the UE, and Srxlev > SearchHCS in the current serving cell of the UE, the UE measures at least inter-frequency cells in the MBMS preferred frequency layer;
   (2) If Sx ≤ Sintersearch in the current serving cell of the UE, or if the UTRAN has sent a Search HCS message to the current serving cell of the UE, and Srxlev > SearchHCS in the current serving cell of the UE, the UE performs inter-frequency measurements;
   (3) If the UTRAN does not send Sintersearch in the current serving cell of the UE, the UE performs inter-frequency measurements.
2.
   (1) If Sx ≤ Ssearch RATm in the current serving cell of the UE, and the UTRAN has sent a S_{HCS,RATm} message to the current serving cell of the UE, and Srxlev ≤ S_{HCS.RATm} in the current serving cell of the UE, the UE measures RAT "m" cells, that is, cells adopting RAT "m";
   (2) If the UTRAN does not send Ssearch RATm in the current serving cell of the UE, the UE measures RAT "m" cells.

In the preceding inter-frequency or inter-system measurement rules, Sintersearch indicates the threshold of inter-frequency measurement, S_{Search HCS} indicates the HCS measurement threshold, Ssearch RATm indicates the m^{th} radio access technology (RAT) threshold (Ssearch RAT), and S_{HCS,RATm} indicates the m^{th} RAT threshold (S_{HCS,RAT}). The values of Sintersearch, Search HCS, S_{HCS,RATm} and Ssearch RATm are sent by the UTRAN through broadcast in the current serving cell of the UE.

In the preceding inter-frequency or inter-system measurement rules, depending on the type of serving cell of the UE, Sx has different meanings. Specifically, in a frequency division duplex (FDD) cell, Sx represents Squal; in a time division duplex (TDD) cell, Sx represents Srxlev.

In 3GPP specifications, the S criterion means that Squal and Srxlev should satisfy the following requirements:
FDD cell: Srxlev > 0 and Squal > 0
TDD cell: Srxlev > 0
GSM cell: Srxlev > 0

Where:
Squal = Q_{qualmeas}- Qqualmin
Srxlev = Qᵣₓₗₑᵥₘₑₐₛ - Qrxlevmin - Pcompensation

The meanings of parameters in the above formulas are listed in the table below:

| | |
|---|---|
| Squal | Cell selection quality, applicable to only FDD cells |
| Srxlev | Cell selection receive (Rx) level |
| Q_{qualmeas} | Cell quality measured, applicable to only FDD cells |
| Qᵣₓₗₑᵥₘₑₐₛ | Cell Rx level measured |
| Q_{qualmin} | Minimum quality level required in the cell, applicable to only FDD cells |
| Qrxlevmin | Minimum Rx level required in the cell |
| Pcompensation | Maximum value (UE_TXPWR_MAX_RACH - P_MAX, 0) |
| UE_TXPWR_MAX_RACH | Possible maximum transmit power when the UE accesses the cell through a RACH |
| P_MAX | Maximum radio frequency transmit power of the UE |

The preceding inter-frequency or inter-system measurement rules are applicable only when the UE is in the idle, URA_PCH or CELL_PCH state.

In addition, when the HCS is in use, the UE performs inter-frequency or inter-system measurements in the following rules:

For a UE not moving at a high speed:
(1) If Srxlev ≤ S_{searchHCS} or if the UE works in an FDD mode and Srxlev ≤ S_{searchHCS,} the UE measures all intra-frequency and inter-frequency cells; if Sx > Sintrasearch, the UE measures all intra-frequency and inter-frequency cells that have a higher HCS priority than the current serving cell of the UE; if Sx s Sintrasearch, the UE measures all intra-frequency and inter-frequency cells with an HCS priority equal to or higher than the HCS priority of the current serving cell of the UE;
(2) If the UTRAN does not send Sintrasearch in the current serving cell of the UE, the UE measures all intra-frequency cells as well as all inter-frequency cells that have a higher HCS priority than the current serving cell of the UE;
(3) If the UTRAN does not send SearchHCS in the current serving cell of the UE, or if the UE works in the FDD mode and the UTRAN does not send Sintersearch in the current serving cell of the UE, the UE measures all intra-frequency and inter-frequency cells;
(4) If Srxlev ≤ S_{HCS.RATm} or if the UE works in the FDD mode and Sx ≤ SsearchRATm, the UE measures all adjacent RAT"m" cells); if Sx > SearchRATm, the UE may not measure adjacent RAT"m" cells; otherwise, the UE measures all adjacent RAT"m" cells with an HCS priority equal to or higher than the HCS priority of the current serving cell of the UE;
(5) If the UTRAN does not send S_{HCS,RATm} in the current serving cell of the UE, the UE measures all adjacent RAT"m" cells.

For a UE moving at a high speed:
(1) If Srxlev ≤ SsearchHCS, or if the UE works in the FDD mode and Sx s Sintersearch, or if the UTRAN does not send SearchHCS in the current serving cell of the UE, or if the UE works in the FDD mode and the UTRAN does not send Sintersearch in the current serving cell of the UE, the UE measures all intra-frequency and inter-frequency cells; otherwise, the UE measures intra-frequency and inter-frequency cells with an HCS priority equal to or lower than the HCS priority of the current serving cell of the UE;
(2) If Srxlev s S_{HCS.RATm}, or if the UE works in the FDD mode and Sx ≤ SsearchRATm, or if the UTRAN does not send S_{HCS,RATm} or SsearchRATm in the current serving cell of the UE, the UE measures all adjacent RAT"m" cells; otherwise, the UE measures all adjacent RAT"m" cells with an HCS priority equal to or lower than the HCS priority of the current serving cell of the UE.

In the preceding measurement rules, the values of Sintersearch, Search HCS, S_{HCS,RATm} and Ssearch RATm are sent by the UTRAN through broadcast in the current serving cell of the UE.

The preceding measurement rules are applicable only when the UE is in the idle, URA_PCH or CELL_PCH state. When the UE is in the CELL_FACH state, the UE measures all adjacent cells. In 3GPP specifications, if inter-frequency or inter-system measurements are not applicable according to the above measurement rules, a UE in reception of MBMS services is not allowed to interrupt the reception of MTCH information.

For example, if an FDD UE in the idle, CELL_PCH or URA_PCH state is receiving MBMS services, the UE performs inter-frequency or inter-system measurements on inter-frequency or inter-system cells in the following procedure:
(1) The FDD UE measures the Rx quality of the current serving cell of the UE according to the system measurement control information sent by the UTRAN;
(2) The FDD UE judges whether it is necessary to measure inter-frequency or inter-system cells according to the above measurement rules with reference to the Rx quality of the current serving cell of the UE;
(3) If the FDD UE judges that inter-frequency or inter-system measurements are unnecessary, the FDD UE is not allowed to interrupt the reception of MTCH information; if the FDD UE judges that inter-frequency or inter-system measurements are necessary, the FDD UE interrupts the reception of MTCH information and measures inter-frequency or inter-system cells.

An FDD UE in reception of MBMS services judges only according to the above measurement rules whether it is necessary to interrupt the reception of MTCH information and perform inter-frequency or inter-system measurements. In practice, however, when an FDD UE in reception of MBMS services judges whether to perform inter-frequency or inter-system measurements, the UE considers not only the above measurement rules, but also whether the Rx quality of the current serving cell of the UE meets the requirement of the S criterion (whether the Rx quality of the current serving cell of the UE is above 0). If the Rx quality of the current serving cell measured by the FDD UE does not meet the requirement of the S criterion in Nserv (a known parameter in FDD) discontinuous reception (DRX) cycles, even if inter-frequency or inter-system measurements are unnecessary according to the above measurement rules, the FDD UE needs to measure all inter-frequency or inter-system cells indicated by the UTRAN, and this inevitably interrupts the reception of MTCH information and MCCH information. As a result, the performance of the FDD UE in receiving MBMS services is lower than expected, because the expected MBMS reception performance is based on an assumption that the reception of MTCH and MCCH information is interrupted when inter-frequency or inter-system measurements are necessary according to the measurement rules.

In addition, according to the prior measurement rules, if the HCS is not in use, when the quality of the current serving cell of the UE is good enough (which means the broadcast channel quality of the current serving cell is above the preset threshold, or the Sx value obtained by applying the S criterion to the current serving cell is above the preset threshold), the UE may choose not to perform inter-frequency or inter-system measurements, or choose to perform inter-frequency or inter-system measurements. If the HCS is in use, when the quality of the current serving cell of the UE is good enough, the UE still needs to perform inter-frequency or inter-system measurements. In this case, the UE measures only inter-frequency or inter-system cells that have a higher or lower HCS priority than the current serving cell of the UE. As the quality of the current serving cell of the UE is already good enough for residence of the UE, such measurements are meaningless. When the UE performs the meaningless inter-frequency or inter-system measurements, it is inevitable to interrupt the reception of MTCH and MCCH information, and thus the performance of the UE in receiving MBMS services is inevitably degraded.

3GPP TS 25.304 version 6.7.0 Release 6 and ETSI TS 125 304 V6.7.0 (2005-09) Technical Specification discloses User Equitpment (UE) procedures in idle mode and procedures for cell reselection in connected mode.

Siemens "Measurement requirements in conjunction with MBMS reception in different RRC states" 3GPP darft; R4-040635, 3rd generation partnership project (3GPP) disclose a solution to solve the impact of the MBMS data loss on the MBMS QoS depends on the configuration of the MBMS service and the actual UE state which defines the UE measurement activity. The MBMS specific parameters are taken into account durting an MBMS session. This would enable the network to treat the UEs currently receiving MBMS differently to the UEs which are not receiving MBMS.

### Summary of the Invention

The present invention discloses a method according to claim 1 for performing inter-frequency or inter-system measurements, the object of the invention is accurately estimating the performance of a UE in receiving MBMS services and avoiding meaningless inter-frequency measurements, in order to assuring the performance of the UE in receiving MBMS services.

In accordance with the method, the present invention also discloses a UE according to claim 8. Preferred features are set out in claims 2-7 and 9-10.

Technical solution of the present disclosure is described as follows:

A method for performing inter-frequency or inter-system measurements, including: performing, by a user equipment, UE, in reception of MBMS information, computation on a current serving cell of the UE according to S criterion, wherein the current serving cell is a frequency division duplex, FDD, cell, and the S criterion is formulated as Squal>0 and Srxlev>0, where the Squal is a value of cell selection quality and the Srxlev is a value of cell selection receive (Rx) level; if the S criterion of the current serving cell of the UE is fulfilled according to a result of the computation, receiving, by the UE, the MBMS information uninterruptedly and not performing inter-frequency or inter-system measurements on inter-frequency or inter-system cells.

A UE includes: a threshold setting unit, adapted to preset a cell quality threshold; a first judging unit, adapted to judge whether the quality of a current serving cell of the UE is above the cell quality threshold preset by the threshold setting unit when the UE is in reception of MBMS information; and a first information receiving and processing unit. Wherein if the quality of a current serving cell of the UE is above the cell quality threshold, the first information receiving and processing unit is adapted to receive MBMS services uninterruptedly and screen inter-frequency or inter-system measurements on inter-frequency or inter-system cells

A method for performing inter-frequency or inter-system measurements includes: a UE in reception of MBMS information performs an S criterion computation on a current serving cell of the UE; and receives MBMS information uninterruptedly and screens inter-frequency or inter-system measurements on inter-frequency or inter-system cells if S criterion of the current serving cell of the UE is fulfilled according to a result of the S criterion computation.

A UE includes: a computing unit, adapted to perform an S criterion computation on a current serving cell of the UE when the UE is in reception of MBMS information, wherein the current serving cell is a frequency division duplex, FDD, cell, and the S criterion is formulated as Squal>0 and Srxlev>0, where the Squal is a value of cell selection quality and the Srxlev is a value of cell selection receive (Rx) level; a judging unit, adapted to judge whether the S criterion of the current serving cell of the UE is fulfilled according to a computation result of the computing unit; and a first information receiving and processing unit, adapted to receive MBMS information uninterruptedly, and screen inter-frequency or inter-system measurements on inter-frequency or inter-system cells if the judging unit (110) judges that the S criterion of the current serving cell of the UE is fulfilled according to the result of the S criterion computation.

Embodiments of the present invention provide the following benefits:

The invention provides a rule for judging the quality of the current serving cell of a UE and includes the rule into prior decision rules for the UE to judge whether inter-frequency or inter-system measurements are necessary, so that the UE can estimate its performance in receiving MBMS services more accurately and avoid some meaningless inter-frequency or inter-system measurements in certain circumstances, thus assuring that the performance requirement of the UE in receiving MBMS services is not degraded.

The invention also proposes an S criterion computation on the current serving cell of a UE and includes the rule to judge whether the S criterion computation result satisfies the S criterion requirement into prior decision rules for the UE to judge whether inter-frequency or inter-system measurements are necessary, so that the UE can estimate its performance in receiving MBMS services more accurately and avoid some meaningless inter-frequency or inter-system measurements in certain circumstances, thus assuring that the performance requirement of the UE in receiving MBMS services is not degraded.

### Brief Description of the Drawings

Figure 1 is a schematic diagram of a first method for performing inter-frequency or inter-system measurements based on reception of MBMS services of the present invention;
Figure 2 is a flowchart of the first embodiment of the first method of the present invention;
Figure 3 is a flowchart of the second embodiment of the first method of the present invention ;
Figure 4 is a schematic block diagram of a first UE of the present invention;
Figure 5 is a block diagram of the first embodiment of the first UE of the invention;
Figure 6 is a block diagram of the second embodiment of the first UE of the invention;
Figure 7 is a schematic diagram of a second method for performing inter-frequency or inter-system measurements based on reception of MBMS services of the present invention;
Figure 8 is a flowchart of an embodiment of the second method of the present invention; and
Figure 9 is a schematic block diagram of a second UE of the present invention.

### Detailed Description of the Invention

The embodiment of the present invention provide methods and UE for Performing Inter-Frequency or Inter-System Measurements to estimate performance of the UE in receiving MBMS services and avoid performing meaningless inter-frequency or inter-system measurements, in order to assure that the performance of the UE in receiving MBMS services is not degraded.

Embodiments of the present invention are described as follows with reference to accompanying drawings and embodiments.

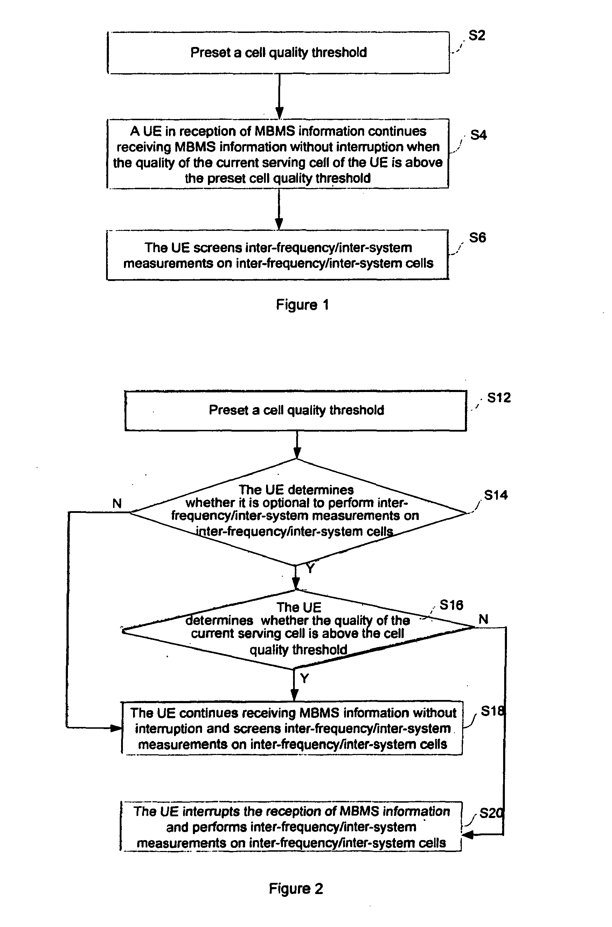

Figure 1 shows a schematic diagram of the first method for performing inter-frequency or inter-system measurements based on reception of MBMS services. The method is described as follows:

At block S2: a cell quality threshold is preset in a UE, the preset cell quality threshold may be but is not limited to:
a cell broadcast channel (CBCH) Rx quality threshold; or
a cell quality threshold applied to the S criterion (for details of the S criterion, see related descriptions in "Background of the Invention").

At block S4: The UE in reception of MBMS information does not interrupt the reception of MBMS information if the quality of the current serving cell of the UE is above the preset cell quality threshold (that is, before and after the judging is made, the UE continues receiving MBMS information without interruption), so as to assure the quality in receiving MBMS information.

If the preset cell quality threshold is a CBCH Rx quality threshold, the UE measures the Rx quality of the broadcast channel in the current serving cell of the UE and compares the measured Rx quality value of the broadcast channel in the current serving cell with the preset CBCH Rx quality threshold to judge whether the Rx quality value of the broadcast channel in the current serving cell is above the preset CBCH Rx quality threshold.

If the preset cell quality threshold is a cell quality threshold applied to the S criterion, the UE performs an S criterion computation on the current serving cell of the UE and compares the S criterion based quality value of the current serving cell with the preset cell quality threshold applied to the S criterion to judge whether the S criterion based quality value of the current serving cell is above the cell quality threshold applied to the S criterion.

At block S6: The UE screens inter-frequency or inter-system measurements on inter-frequency or inter-system cells, that is, the UE does not perform inter-frequency or inter-system measurements on inter-frequency or inter-system cells.

As shown in Figure 2, a flowchart of the first example of the first method of the present disclosure, method is described as in further detail below:

At block S12: a cell quality threshold is preset in a UE.

At block S14: The UE judges whether the inter-frequency or inter-system measurements on inter-frequency or inter-system cells can be performed, that is, the UE judges whether it is optional to perform inter-frequency or inter-system measurements on inter-frequency or inter-system cells.

If the UE is in the idle, CELL_PCH or URA_PCH state, the UE performs an S criterion computation on the current serving cell of the UE (for the formula of the S criterion computation, see related descriptions in "Background of the Invention").

Then, the UE judges whether it is optional to perform inter-frequency or inter-system measurements on inter-frequency or inter-system cells according to the result of the S criterion computation on the current serving cell and the system measurement control information sent by the UTRAN on the basis of inter-frequency or inter-system measurement rules (see related descriptions in "Background of the Invention").

If the UE is in the CELL_FACH or CELL_DCH state, the UE judges whether it is optional to perform inter-frequency or inter-system measurements on inter-frequency or inter-system cells according to the system measurement control information indicated by the UTRAN.

If the UE is optional to perform inter-frequency or inter-system measurements on inter-frequency or inter-system cells, the UE performs block S16, otherwise performs the block S18.

At block S16: The UE in reception of MBMS information judges whether the quality of the current serving cell of the UE is above the preset cell quality threshold, if the quality of the current serving cell of the UE is above the preset cell quality threshold , performs block S18 otherwise performs block S20.

At block S18: The UE receives the MBMS information uninterruptedly and screens inter-frequency or inter-system measurements on inter-frequency or inter-system cells.

At block S20: The UE interrupts the reception of MBMS information and performs inter-frequency or inter-system measurements on inter-frequency or inter-system cells; or the UE chooses not to perform inter-frequency or inter-system measurements on inter-frequency or inter-system cells and receive MBMS information uninterruptedly.

In an example of the disclosure, the method is described as follows:

A UE receives system measurement control information sent by the UTRAN and measures the Rx quality of the current serving cell of the UE;

When the UE judges that it is optional to perform inter-frequency or inter-system measurements according to the system measurement control information sent by the UTRAN and/or the result of the S criterion computation on the current serving cell, the UE further judges whether the quality of the current serving cell is good enough (above the preset cell quality threshold) and, if the quality of the current serving cell is good enough, the UE in reception of MTCH information and/or MCCH information does not perform inter-frequency or inter-system measurements without interrupting the reception of MTCH information and/or MCCH information to ensure the performance in receiving MTCH information and/or MCCH information; otherwise, the UE may interrupt the reception of MTCH information and/or MCCH information and perform inter-frequency or inter-system measurements, or choose not to interrupt the reception of MTCH information and/or MCCH information and not to perform inter-frequency or inter-system measurements.

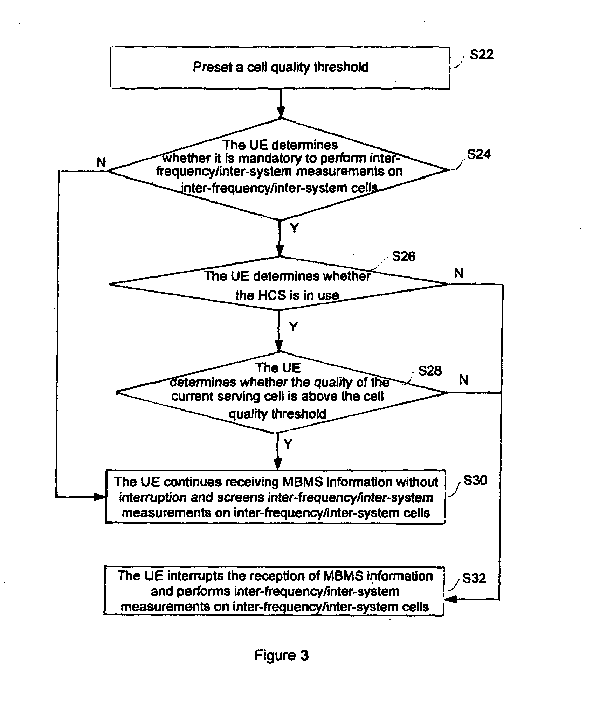

As shown in Figure 3, a flowchart of the second example of the first method of the present disclosure, the method is described in detail as follows:

At block S22: a cell quality threshold is preset in a UE.

At block S24: The UE judges whether inter-frequency or inter-system measurements on inter-frequency or inter-system cells is mandatory to perform.

If the UE is in the idle, CELL_PCH or URA_PCH state, the UE performs an S criterion computation on the current serving cell of the UE (for the formula of the S criterion computation, see related descriptions in "Background of the Invention").

Then, the UE judges whether the inter-frequency or inter-system measurements on inter-frequency or inter-system cells is mandatory to perform according to a result of the S criterion computation on the current serving cell and the system measurement control information sent by the UTRAN on the basis of inter-frequency or inter-system measurement rules (see related descriptions in "Background of the Invention").

If the UE is in the CELL_FACH or CELL_DCH state, the UE judges whether the inter-frequency or inter-system measurements on inter-frequency or inter-system cells is mandatory to perform according to the system measurement control information indicated by the UTRAN.

If the inter-frequency or inter-system measurements on inter-frequency or inter-system cells is mandatory to perform, the UE performs block S26, otherwise performs block S28.

At block S26: The UE judges whether the HCS is in use, and if the HCS is in use, the UE performs block S28, otherwise performs block S32.

At block S28: The UE in reception of MBMS information judges whether the quality of the current serving cell of the UE is above the preset cell quality threshold, and if the quality of the current serving cell of the UE is above the preset cell quality threshold, performs block, S30, otherwise performs S32.

At block S30: The UE continues receiving MBMS information uninterruptedly and screens inter-frequency or inter-system measurements on inter-frequency or inter-system cells.

At block S32: The UE interrupts the reception of MBMS information and performs inter-frequency or inter-system measurements on inter-frequency or inter-system cells.

The MBMS information includes MBMS point-to-multipoint traffic channel (MTCH) information and/or MBMS point-to-multipoint control channel (MCCH) information.

In an example of the disclosure, the method is described as follows:

A UE receives system measurement control information sent by the UTRAN and measures the Rx quality of the current serving cell of the UE;
if the inter-frequency or inter-system measurements is mandatory to perform according to the system measurement control information and/or the result of the S criterion computation on the current serving cell, the UE further judges whether the HCS is in use and, if the HCS is not in use, the UE in reception of MTCH information and/or MCCH information interrupts the reception and performs inter-frequency or inter-system measurements; If the HCS is in use,
the UE further judges whether the quality of the current serving cell of the UE is good enough (above the preset cell quality threshold) and, if the quality of the current serving cell of the UE is good enough, the UE in reception of MTCH information and/or MCCH information does not perform inter-frequency or inter-system measurements, that is, the UE continues receiving MTCH information and/or MCCH information to ensure the performance in receiving MTCH information and/or MCCH information; otherwise the UE interrupts the reception of MTCH information and/or MCCH information and performs inter-frequency or inter-system measurements.

In accordance with the method, a UE is provided. The UE includes:
a threshold setting unit 10, adapted to preset a cell quality threshold, which may be a CBCH Rx quality threshold or a cell quality threshold applied to the S criterion;
a first judging unit 20, adapted to judge whether the quality of the current serving cell of the UE is above the cell quality threshold preset in the threshold setting unit 10 when the UE is in reception of MBMS information;
if the preset cell quality threshold is a CBCH Rx quality threshold, the first judging unit 20 measures the Rx quality of the broadcast channel in the current serving cell of the UE and compares the measured Rx quality value of the broadcast channel in the current serving cell with the CBCH Rx quality threshold preset in the threshold setting unit 10 to judge whether the Rx quality value of the broadcast channel in the current serving cell is above the CBCH Rx quality threshold preset in the threshold setting unit 10;if the preset cell quality threshold is a cell quality threshold applied to the S criterion, the first judging unit 20 performs an S criterion computation on the current serving cell of the UE and compares the S criterion based quality value of the current serving cell with the cell quality threshold applied to the S criterion preset in the threshold setting unit 10 to judge whether the S criterion based quality value of the current serving cell is above the cell quality threshold applied to the S criterion preset in the threshold setting unit 10;
a first information receiving and processing unit 30, adapted to receive MBMS information uninterruptedly and screen inter-frequency or inter-system measurements on inter-frequency or inter-system cells if the S criterion based quality value of the current serving cell is above the cell quality threshold applied to the S criterion preset in the threshold setting unit 10.

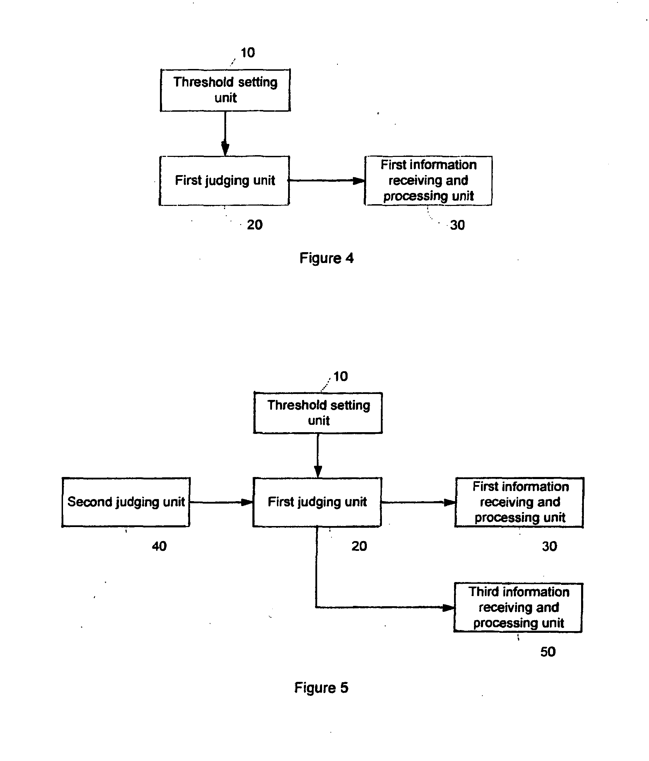

As shown in Figure 5, a block diagram of the first example of the first UE of the disclosure, further includes a second judging unit 40 and a third information receiving and processing unit 50 on the basis of Figure 4. The function of each unit is as follows:
the threshold setting unit 10, adapted to preset a cell quality threshold; the second judging unit 40, adapted to judge whether the UE can perform inter-frequency or inter-system measurements on inter-frequency or inter-system cells, that is, whether it is optional to perform inter-frequency or inter-system measurements;
the first judging unit 20, adapted to judge whether the quality of the current serving cell of the UE is above the cell quality threshold preset in the threshold setting unit 10 if the UE can perform inter-frequency or inter-system measurements on inter-frequency or inter-system cells while the UE is in reception of MBMS information;
the first information receiving and processing unit 30, adapted to continue receiving MBMS information uninterruptedly and screen inter-frequency or inter-system measurements on inter-frequency or inter-system cells if the quality of the current serving cell of the UE is above the cell quality threshold preset in the threshold setting unit 10, ; and
the third information receiving and processing unit 50, adapted to choose to interrupt the reception of MBMS information and perform inter-frequency or inter-system measurements on inter-frequency or inter-system cells or choose to continue receiving MBMS information and screen inter-frequency or inter-system measurements on inter-frequency or inter-system cells if the quality of the current serving cell of the UE is above the cell quality threshold preset in the threshold setting unit 10. example disclosure

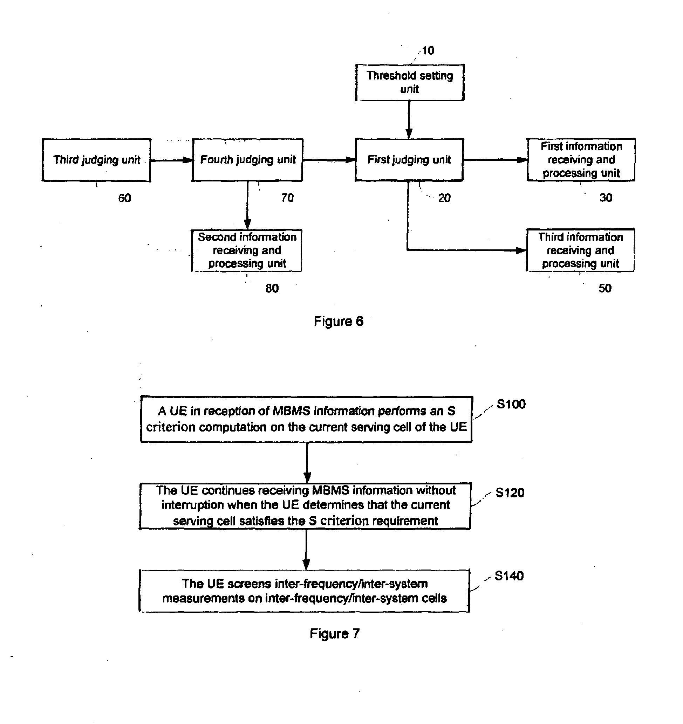

As shown in Figure 6, a UE according to another example of the disclosure further includes a third information receiving and processing unit 50, a third judging unit 60, a fourth judging unit 70 and a second information receiving and processing unit 80 on the basis of Figure 4. The function of each unit is as follows:
the threshold setting unit 10, adapted to preset a cell quality threshold;
the third judging unit 60, adapted to judge whether the inter-frequency or inter-system measurements on inter-frequency or inter-system cells is mandatory to perform;
the fourth judging unit 70, adapted to judge whether the HCS is in use if the inter-frequency or inter-system measurements on inter-frequency or inter-system cells is mandatory to perform;
the second information receiving and processing unit 80, adapted to interrupt the reception of MBMS information and perform inter-frequency or inter-system measurements on inter-frequency or inter-system cells if the HCS is not in use;
the first judging unit 20, adapted to judge whether the quality of the current serving cell of the UE is above the cell quality threshold preset in the threshold setting unit 10 if the HCS is in use while the UE is in reception of MBMS information;
the first information receiving and processing unit 30, adapted to continue receiving MBMS information uninterruptedly and screen inter-frequency or inter-system measurements on inter-frequency or inter-system cells if the quality of the current serving cell of the UE is above the cell quality threshold preset in the threshold setting unit 10; and
the third information receiving and processing unit 50, adapted to interrupt the reception of MBMS information and perform inter-frequency or inter-system measurements on inter-frequency or inter-system cells if the quality of the current serving cell of the UE is above the cell quality threshold preset in the threshold setting unit 10.

Figure 7 gives a schematic drawing of the second method for performing inter-frequency or inter-system measurements based on reception of MBMS services. The main implementation procedure is as follows:

At block S100: A UE in reception of MBMS information performs an S criterion computation on the current serving cell of the UE (for the formula of the S criterion computation, see related descriptions in "Background of the Invention").

At block S120: When the UE judges that the S criterion of the current serving cell of the UE is fulfilled according to (Squal > 0 and/or Srxlev > 0) according to the result of the S criterion computation, the UE continues receiving MBMS information uninterruptedly.

At block S140: The UE screens inter-frequency or inter-system measurements on inter-frequency or inter-system cells simultaneously with block S120 to ensure the performance in receiving MBMS services.

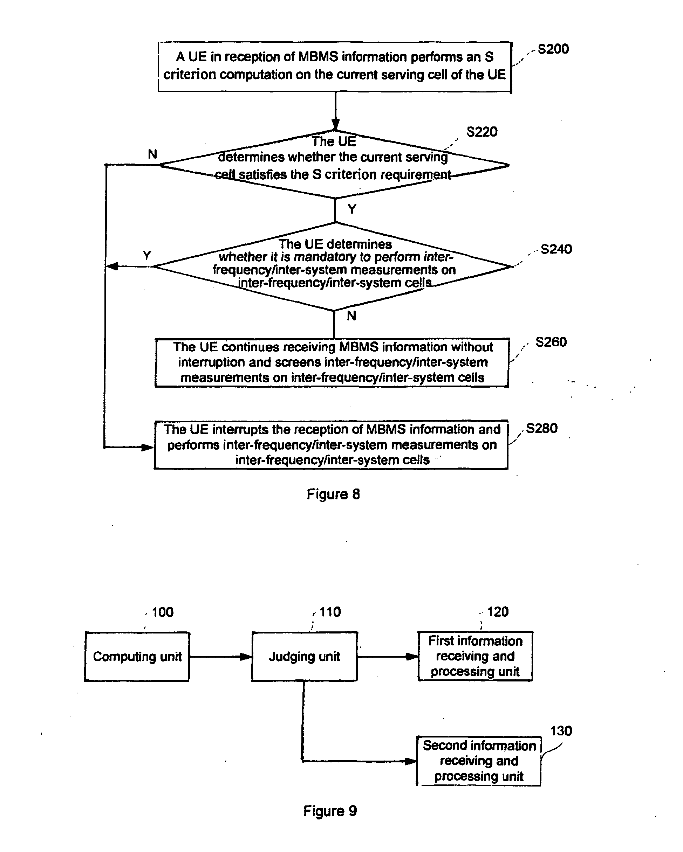

As shown in Figure 8, a procedure of the second method according to an embodiment of the invention includes:

At block S200: A UE in reception of MBMS information performs an S criterion computation on the current serving cell of the UE.

At block S220: the UE judges whether the S criterion of the current serving cell of the UE is fulfilled according to the result of the S criterion computation and, if the S criterion of the current serving cell of the UE is fulfilled according to a result of the S criterion computation, the UE performs block S240, otherwise perform block S280.

At block S240: The UE judges whether the inter-frequency or inter-system measurements on inter-frequency or inter-system cells is mandatory to perform.

If the UE is in the idle, CELL_PCH or URA_PCH state, the UE performs an S criterion computation on the current serving cell of the UE (for the formula of the S criterion computation, see related descriptions in "Background of the Invention").

Then, the UE judges whether the inter-frequency or inter-system measurements on inter-frequency or inter-system cells is mandatory to perform according to the result of the S criterion computation on the current serving cell and the system measurement control information sent by the UTRAN on the basis of inter-frequency or inter-system measurement rules (see related descriptions in "Background of the Invention").

If the UE is in the CELL_FACH or CELL_DCH state, the UE judges whether inter-frequency or inter-system measurements on inter-frequency or inter-system cells is mandatory to perform according to the system measurement control information indicated by the UTRAN.

If the inter-frequency or inter-system measurements on inter-frequency or inter-system cells is mandatory to perform, the UE performs block S280, otherwise performs block S260.

At block S260: The UE continues receiving MBMS information uninterruptedly and screens inter-frequency or inter-system measurements on inter-frequency or inter-system cells to ensure the performance in receiving MBMS information.

At block S280: The UE interrupts the reception of MBMS information and performs inter-frequency or inter-system measurements on inter-frequency or inter-system cells.

The MBMS information includes MBMS point-to-multipoint traffic channel (MTCH) information and/or MBMS point-to-multipoint control channel (MCCH) information.

In an embodiment of the invention, the steps are as follows:

A UE in the idle, CELL_PCH or URA_PCH state receives system measurement control information from the UTRAN and performs an S criterion computation on the current serving cell;

The UE judges whether the inter-frequency or inter-system measurements on inter-frequency or inter-system cells is mandatory to perform according to the result of the S criterion computation on the current serving cell and the system measurement control information sent by the UTRAN, with reference to the inter-frequency or inter-system measurement rules and the S criterion requirement for the current serving cell;

If the UE judges that it is not mandatory to perform inter-frequency or inter-system measurements on inter-frequency or inter-system cells, the UE in reception of MBMS services is not allowed to interrupt the reception of MBMS information (including MTCH information and/or MCCH information) to ensure the performance in receiving MBMS services.

In accordance with the second method, another type of UE is provided. Figure 9 is a structure diagram of a UE of the second type according to an embodiment of the invention. The UE includes:
a computing unit 100, adapted to perform an S criterion computation on the current serving cell of the UE when the UE is receiving MBMS information;
a judging unit 110, adapted to judge whether the S criterion of the current serving cell of the UE is fulfilled according to an computation result of the computing unit 100;
a first information receiving and processing unit 120, adapted to receive MBMS information uninterruptedly and screen inter-frequency or inter-system measurements on inter-frequency or inter-system cells if the S criterion of the current serving cell of the UE is fulfilled; and
a second information receiving and processing unit 130, adapted to interrupt the reception of MBMS information and perform inter-frequency or inter-system measurements on inter-frequency or inter-system cells if the S criterion of the current serving cell of the UE is not fulfilled.

It is apparent that those skilled in the art can make various modifications and variations to the present invention without departing from the scope of the present invention. The present invention is intended to cover these modifications and variations provided that they fall in the scope of protection defined by the following claims or their equivalents.

## Claims

1. A method for performing inter-frequency or inter-system measurements, **characterized in that** the method comprises: Multimedia Broadcas/multicast Service
performing (S100;S200), by a user equipment, UE, in reception of, MBMS, information, computation on a current serving cell of the UE according to S criterion, wherein the current serving cell is a frequency division duplex, FDD, cell and the S criterion is formulated as Squal>0 and Srxlev>0, where the Squal is a value of cell selection quality and the Srxlev is a value of cell selection receive, Rx, level;
if the S criterion of the current serving cell of the UE is fulfilled according to a result of the computation,
receiving (S120; S260), by the UE, the MBMS information uninterruptedly and not performing (S 140; S260) inter-frequency or inter-system measurements on inter-frequency or inter-system cells.

2. The method of claim 1, wherein, the method comprises:
Interrupting the reception of MBMS information, by the UE in reception of MBMS information if the S criterion of the current serving cell of the UE in reception of the MBMS information is not fulfilled according to the result of the computation (S280) ; and
performing (S280), by the UE, inter-frequency or inter-system measurements on inter-frequency or inter-system cells.

3. The method of claim 1, wherein, the UE is in the idle, CELL_PCH or URA_PCH state.

4. The method of claim 3, wherein if the S criterion of the current serving cell of the UE is fulfilled according to a result of the computation, the method further comprises:
judging (S240), by the UE, whether the inter-frequency or inter-system measurements on inter-frequency or inter-system cells is mandatory to perform according to the result of the computation and system measurement control information sent by a UMTS Terrestrial Radio Access Network, UTRAN, on the basis of inter-frequency or inter-system measurement rules,
if the inter-frequency or inter-system measurements is mandatory to perform, interrupting, by the UE, the reception of MBMS information and performing inter-frequency or inter-system measurements on inter-frequency or inter-system cells (S280); otherwise,
receiving, by the UE, MBMS information uninterruptedly and not performing inter-frequency or inter-system measurements on inter-frequency or inter-system cells (S260).

5. The method of claim 1, wherein, the UE is in the CELL_FACH or CELL_DCH state.

6. The method of claim 5, wherein if the S criterion of the current serving cell of the UE is fulfilled according to a result of the computation, the method further comprises:
judging, by the UE, whether the inter-frequency or inter-system measurements on inter-frequency or inter-system cells is mandatory to perform according to system measurement control information indicated by a UTRAN, if the inter-frequency or inter-system measurements is mandatory to perform, interrupting the reception of MBMS information and performing inter-frequency or inter-system measurements on inter-frequency or inter-system cells; otherwise,
receiving, by the UE, MBMS information uninterruptedly and not performing inter-frequency or inter-system measurements on inter-frequency or inter-system cells.

7. The method of any of claims 1-6, wherein, the MBMS information is:
MBMS point-to-multipoint traffic channel, MTCH, information; and or
MBMS point-to-multipoint control channel, MCCH, information.

8. A user equipment, UE, **characterized in that** the UE comprises:
a computing unit (100), adapted to perform computation on a current serving cell of the UE according to S criterion when the UE is receiving Multimedia Broadcast/Multicast Service, MBMS, information, wherein the current serving cell is a frequency division duplex, FDD, cell, and the S criterion is formulated as Squal>0 and Srx1ev>0, where the Squal is a value of cell selection quality and the Srxlev is a value of cell selection receive, Rx, level;
a judging unit (110), adapted to judge whether the S criterion of the current serving cell of the UE is fulfilled according to a computation result of the computing unit; and
a first information receiving and processing unit (120),
wherein if the judging unit (110) judges that the S criterion of the current serving cell of the UE is fulfilled according to the result of the computation, the first information receiving and processing unit (120) adapted to receive MBMS information uninterruptedly and not perform inter-frequency or inter-system measurements on inter-frequency or inter-system cells.

9. The UE of claim 8, wherein if the judging unit (110) judges that the S criterion of the current serving cell of the UE is not fulfilled according to the result of the computation, the UE further comprises:
a second information receiving and processing unit (130), adapted to interrupt the reception of MBMS information and perform inter-frequency or inter-system measurements on inter-frequency or inter-system cells.

10. The UE of claim 8, wherein the UE is in the idle, CELL_PCH or URA_PCH state, and if the judging unit (110) judges that the S criterion of the current serving cell of the UE is fulfilled according to a result of the computation, the UE further comprises:
means for judging whether the inter-frequency or inter-system measurements on inter-frequency or inter-system cells is mandatory to perform according to the result of the computation and system measurement control information sent by a UMTS Terrestrial Radio Access Network, UTRAN, on the basis of inter-frequency or inter-system measurement rules,
means for interrupting the reception of MBMS information and performing inter-frequency or inter-system measurements on inter-frequency or inter-system cells if the inter-frequency or inter-system measurements is mandatory to perform; and
means for receiving MBMS information uninterruptedly and not performing inter-frequency or inter-system measurements on inter-frequency or inter-system cells if the inter-frequency or inter-system measurement is not mandatory to perform.

## Patentansprüche

1. Verfahren zum Durchführen von Messungen zwischen Frequenzen oder zwischen Systemen, **dadurch gekennzeichnet, dass** das Verfahren die folgenden Schritte umfasst:
ein Benutzergerät UE führt beim Empfang von Informationen des Multimedia Broadcast/Multicast Service MBMS eine Berechnung an einer aktuellen versorgenden Zelle des UE gemäß dem S-Kriterium durch (S 100; S200), wobei die aktuelle versorgende Zelle eine Zelle mit Frequenzduplex FDD ist und das S-Kriterium als Squal>0 und Srxlev>0 formuliert ist, wobei Squal ein Wert der Zellenauswahlgüte und Srxlev ein Wert des Pegels des Zellenauswahlempfangs Rx ist;
wenn das S-Kriterium der aktuellen versorgenden Zelle des UE gemäß einem Ergebnis der Berechnung erfüllt ist,
empfängt (S 120; S260) das UE die MBMS-Informationen ohne Unterbrechung und führt Messungen zwischen Frequenzen oder Systemen auf Zellen zwischen Frequenzen oder zwischen Systemen nicht durch (S 140; S260).

2. Verfahren nach Anspruch 1, wobei das Verfahren die folgenden Schritte umfasst:
das UE unterbricht beim Empfang von MBMS-Informationen den Empfang von MBMS-Informationen, wenn das S-Kriterium der aktuellen versorgenden Zelle des UE beim Empfang der MBMS-Informationen gemäß dem Ergebnis der Berechnung nicht erfüllt ist (S280); und
das UE führt Messungen zwischen Frequenzen oder zwischen Systemen auf Zellen zwischen Frequenzen oder zwischen Systemen durch (S280).

3. Verfahren nach Anspruch 1, wobei sich das UE im Leerlauf-, CELL_PCH- oder URA_PCH-Zustand befindet.

4. Verfahren nach Anspruch 3, wobei, wenn das S-Kriterium der aktuellen versorgenden Zelle des UE gemäß einem Ergebnis der Berechnung erfüllt ist, das Verfahren ferner die folgenden Schritte umfasst:
das UE beurteilt (S240), ob die Messungen zwischen Frequenzen oder zwischen Systemen an Zellen zwischen Frequenzen oder zwischen Systemen verpflichtend durchzuführen sind, gemäß dem Ergebnis der Berechnung und durch ein UMTS Terrestrial Radio Access Network UTRAN gesendeten Systemmesssteuerinformationen auf der Basis von Regeln für die Messung zwischen Frequenzen oder zwischen Systemen,
wenn die Messungen zwischen Frequenzen oder zwischen Systemen verpflichtend durchzuführen sind, unterbricht das UE den Empfang von MBMS-Informationen und führt Messungen zwischen Frequenzen oder zwischen Systemen an Zellen zwischen Frequenzen oder zwischen Systemen durch (S280); andernfalls empfängt das UE MBMS-Informationen ohne Unterbrechung und führt keine Messungen zwischen Frequenzen oder zwischen Systemen an Zellen zwischen Frequenzen oder Zwischen Systemen durch (S260).

5. Verfahren nach Anspruch 1, wobei sich das UE im CELL_FACH- oder CELL_DCH-Zustand befindet.

6. Verfahren nach Anspruch 5, wobei, wenn das S-Kriterium der aktuellen versorgenden Zelle des UE gemäß einem Ergebnis der Berechnung erfüllt ist, das Verfahren ferner die folgenden Schritte umfasst:
das UE beurteilt, ob die Messungen zwischen Frequenzen oder zwischen Systemen an Zellen zwischen Frequenzen oder zwischen Systemen verpflichtend durchzuführen sind, gemäß durch ein UTRAN angegebenen Systemmesssteuerinformationen, wenn die Messungen zwischen Frequenzen oder zwischen Systemen verpflichtend durchzuführen sind, wird der Empfang von MBMS-Informationen unterbrochen und Messungen zwischen Frequenzen oder zwischen Systemen an Zellen zwischen Frequenzen oder zwischen Systemen werden durchgeführt; andernfalls
empfängt das UE MBMS-Informationen ohne Unterbrechung und führt keine Messungen zwischen Frequenzen oder zwischen Systemen an Zellen zwischen Frequenzen oder zwischen Systemen durch.

7. Verfahren nach einem der Ansprüche 1-6, wobei die MBMS-Informationen Folgendes sind:
Informationen des MBMS-Punkt-zu-Mehrpunkt-Verkehrskanals MTCH; und/oder
Informationen des MBMS-Punkt-zu-Mehrpunkt-Steuerkanals MCCH.

8. Benutzergerät UE, **dadurch gekennzeichnet, dass** das UE Folgendes umfasst:
eine Berechnungseinheit (100), die dafür ausgelegt ist, eine Berechnung an einer aktuellen versorgenden Zelle des UE gemäß dem S-Kriterium durchzuführen, wenn das UE Informationen des Multimedia Broadcast/Multicast Service MBMS empfängt, wobei die aktuelle versorgende Zelle eine Zelle mit Frequenzduplex FDD ist und das S-Kriterium als Squal>0 und Srxlev>0 formuliert ist, wobei Squal der Wert der Zellenauswahlgüte ist und Srxlev ein Wert des Pegels des Zellenauswahlempfangs Rx ist;
eine Beurteilungseinheit (110), die dafür ausgelegt ist, gemäß einem Berechnungsergebnis der Berechnungseinheit zu beurteilen, ob das S-Kriterium der aktuellen versorgenden Zelle des UE erfüllt ist; und
eine erste Informationsempfangs- und -verarbeitungseinheit (120), wobei, wenn die Beurteilungseinheit (110) gemäß dem Ergebnis der Berechnung beurteilt, dass das S-Kriterium der aktuellen versorgenden Zelle des UE erfüllt ist,
die erste Informationsempfangs- und -verarbeitungseinheit (120) dafür ausgelegt ist, MBMS-Informationen ohne Unterbrechung zu empfangen und keine Messungen zwischen Frequenzen oder zwischen Systemen an Zellen zwischen Frequenzen oder zwischen Systemen durchzuführen.

9. UE nach Anspruch 8, wobei, wenn die Beurteilungseinheit (110) gemäß dem Ergebnis der Berechnung beurteilt, dass das S-Kriterium der aktuellen versorgenden Zelle des UE nicht erfüllt ist, das UE ferner Folgendes umfasst:
eine zweite Informationsempfangs- und -verarbeitungseinheit (130), die dafür ausgelegt ist, den Empfang von MBMS-Informationen zu unterbrechen und Messungen zwischen Frequenzen oder zwischen Systemen an Zellen zwischen Frequenzen oder zwischen Systemen durchzuführen.

10. UE nach Anspruch 8, wobei sich das UE im Leerlauf-, CELL_PCH- oder URA_PCH-Zustand befindet und wenn die Beurteilungseinheit (110) gemäß einem Ergebnis der Berechnung beurteilt, dass das S-Kriterium der aktuellen versorgenden Zelle des UE erfüllt ist, das UE ferner Folgendes umfasst:
Mittel zum Beurteilen, ob die Messungen zwischen Frequenzen oder zwischen Systemen an Zellen zwischen Frequenzen oder zwischen Systemen verpflichtend durchzuführen sind, gemäß dem Ergebnis der Berechnung und durch ein UMTS Terrestrial Radio Access Network UTRAN gesendeten Systemmesssteuerinformationen auf der Basis von Regeln für die Messung zwischen Frequenzen oder zwischen Systemen,
Mittel zum Unterbrechen des Empfangs von MBMS-Informationen und zum Durchführen von Messungen zwischen Frequenzen oder zwischen Systemen an Zellen zwischen Frequenzen oder zwischen Systemen, wenn die Messungen zwischen Frequenzen oder zwischen Systemen verpflichtend durchzuführen sind; und
Mittel zum Empfangen von MBMS-Informationen ohne Unterbrechung und zum nicht Durchführen von Messungen zwischen Frequenzen oder zwischen Systemen an Zellen zwischen Frequenzen oder zwischen Systemen, wenn die Messungen zwischen Frequenzen oder zwischen Systemen nicht verpflichtend durchzuführen sind.

## Revendications

1. Procédé d'exécution de mesures inter-fréquences ou inter-systèmes, **caractérisé en ce que** le procédé comprend :
l'exécution (S 100 ; S200), par un équipement utilisateur, UE, à la réception d'informations de Service de Diffusion/Multidiffusion Multimédia, MBMS, d'un calcul sur une cellule de desserte courante de l'UE en fonction d'un critère S, la cellule de desserte courante étant une cellule duplex à répartition en fréquence, FDD,
et le critère S étant formulé par Squal > 0 et Srxlev > 0, où Squal est une valeur de qualité de sélection de cellule et Srxlev est une valeur de niveau de réception Rx de sélection de cellule ;
si le critère S de la cellule de desserte courante de l'UE est satisfait en fonction d'un résultat du calcul,
la réception (S 120 ; S260), par l'UE, des informations MBMS de façon ininterrompue et la non-exécution (S 140 ; S260) de mesures inter-fréquences ou inter-systèmes sur des cellules inter-fréquences ou inter-systèmes.

2. Procédé selon la revendication 1, comprenant :
l'interruption de la réception d'informations MBMS, par l'UE à la réception d'informations MBMS si le critère S de la cellule de desserte courante de l'UE à la réception des informations MBMS n'est pas satisfait en fonction du résultat du calcul (S280) ; et
l'exécution (S280), par l'UE, de mesures inter-fréquences ou inter-systèmes sur des cellules inter-fréquences ou inter-systèmes.

3. Procédé selon la revendication 1, dans lequel l'UE est dans l'état inactif CELL_PCH ou URA_PCH.

4. Procédé selon la revendication 3, comprenant en outre si le critère S de la cellule de desserte courante de l'UE est satisfait en fonction d'un résultat du calcul :
le jugement (S240), par l'UE, qu'il est obligatoire ou non d'effectuer les mesures inter-fréquences ou inter-systèmes sur des cellules inter-fréquences ou inter-systèmes en fonction du résultat du calcul et d'informations de commande de mesures de système envoyées par un Réseau d'Accès Radio Terrestre UMTS, UTRAN, d'après des règles de mesures inter-fréquences ou inter-systèmes,
s'il est obligatoire d'effectuer les mesures inter-fréquences ou inter-systèmes, l'interruption, par l'UE, de la réception des informations MBMS et l'exécution de mesures inter-fréquences ou inter-systèmes sur des cellules inter-fréquences ou inter-systèmes, (S280) ; dans le cas contraire,
la réception, par l'UE, d'informations MBMS de façon ininterrompue et la non-exécution de mesures inter-fréquences ou inter-systèmes sur des cellules inter-fréquences ou inter-systèmes (S260).

5. Procédé selon la revendication 1, dans lequel l'UE est dans l'état CELL_FACH ou CELL_DCH.

6. Procédé selon la revendication 5, comprenant en outre, si le critère S de la cellule de desserte courante de l'UE est satisfait en fonction d'un résultat du calcul :
le jugement, par l'UE, qu'il est obligatoire ou non d'effectuer les mesures inter-fréquences ou inter-systèmes sur des cellules inter-fréquences ou inter-systèmes en fonction d'informations de commande de mesures de système indiquées par un UTRAN, s'il est obligatoire d'effectuer les mesures inter-fréquences ou inter-systèmes, l'interruption de la réception d'informations MBMS et l'exécution de mesures inter-fréquences ou inter-systèmes sur des cellules inter-fréquences ou inter-systèmes ; dans le cas contraire,
la réception, par l'UE, d'informations MBMS de façon ininterrompue et la non-exécution de mesures inter-fréquences ou inter-systèmes sur des cellules inter-fréquences ou inter-systèmes.

7. Procédé selon l'une quelconque des revendications 1 à 6, dans lequel les informations MBMS sont :
des informations de canal de trafic point à multipoint de MBMS, MTCH ; et ou
des informations de canal de commande point à multipoint de MBMS, MCCH.

8. Equipement utilisateur, UE, **caractérisé en ce qu'**il comprend :
une unité de calcul (100), adaptée pour exécuter un calcul sur une cellule de desserte courante de l'UE en fonction d'un critère S quand l'UE reçoit des informations de Service de Diffusion/Multidiffusion Multimédia, MBMS, la cellule de desserte courante étant une cellule duplex à répartition en fréquence, FDD, et le critère S étant formulé par Squal > 0 et Srxlev > 0, où Squal est une valeur de qualité de sélection de cellule et Srxlev est une valeur de niveau de réception Rx de sélection de cellule ;
une unité de jugement (110) adaptée pour juger que le critère S de la cellule de desserte courante de l'UE est ou non satisfait en fonction d'un résultat de calcul de l'unité de calcul ; et
une première unité de réception et de traitement d'informations (120),
dans lequel si l'unité de jugement (110) juge que le critère S de la cellule de desserte courante de l'UE est satisfait, en fonction du résultat de la comparaison, la première unité de réception et de traitement d'informations (120) est adaptée pour recevoir des informations MBMS de façon ininterrompue et ne pas exécuter de mesures inter-fréquences ou inter-systèmes sur des cellules inter-fréquences ou inter-systèmes.

9. UE selon la revendication 8, comprenant en outre, si l'unité de jugement (110) juge que le critère S de la cellule de desserte courante de l'UE n'est pas satisfait en fonction du résultat du calcul :
une seconde unité de réception et de traitement d'informations (130), adaptée pour interrompre la réception d'informations MBMS et exécuter des mesures inter-fréquences ou inter-systèmes sur des cellules inter-fréquences ou inter-systèmes.

10. UE selon la revendication 8, dans lequel l'UE est dans l'état inactif CELL_PCH ou URA_PCH, et si l'unité de jugement (110) juge que le critère S de la cellule de desserte courante de l'UE est satisfait en fonction d'un résultat du calcul, l'UE comprend en outre :
un moyen pour juger qu'il est obligatoire ou non d'effectuer les mesures inter-fréquences ou inter-systèmes sur des cellules inter-fréquences ou inter-systèmes en fonction du résultat du calcul et d'informations de commande de mesures de système envoyées par un Réseau d'Accès Radio Terrestre UMTS, UTRAN, d'après des règles de mesures inter-fréquences ou inter-systèmes,
un moyen pour interrompre la réception d'informations MBMS et exécuter des mesures inter-fréquences ou inter-systèmes sur des cellules inter-fréquences ou inter-systèmes s'il est obligatoire d'effectuer les mesures inter-fréquences ou inter-systèmes ; et
un moyen pour recevoir des informations MBMS de façon ininterrompue et ne pas exécuter de mesures inter-fréquences ou inter-systèmes sur des cellules inter-fréquences ou inter-systèmes s'il n'est pas obligatoire d'effectuer les mesures inter-fréquences ou inter-systèmes.
